(19) Europäisches Patentamt
European Patent Office
Office européen des brevets

(11) EP 4 261 973 A1

(12) EUROPEAN PATENT APPLICATION

(43) Date of publication:
**18.10.2023 Bulletin 2023/42**

(21) Application number: **22305543.5**

(22) Date of filing: **13.04.2022**

(51) International Patent Classification (IPC):
***H01M 10/0525*** *(2010.01)* ***H01M 10/0565*** *(2010.01)*

(52) Cooperative Patent Classification (CPC):
**H01M 10/0525; H01M 10/0565;** H01M 2300/0085

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **TOYOTA JIDOSHA KABUSHIKI KAISHA**
  **Toyota-shi, Aichi-ken, 471-8571 (JP)**
- **Universidad Del Pais Vasco**
  **Euskal Herriko Unibertsitatea**
  **48940 Leioa (Vizcaya) (ES)**

(72) Inventors:
- **CASTRO, Laurent**
  **1140 BRUSSELS (BE)**
- **GUEGUEN, Aurélie**
  **1140 BRUSSELS (BE)**
- **COTTE, Stéphane**
  **1140 BRUSSELS (BE)**
- **ALVAREZ, Marta**
  **48940 LEIOA (VIZCAYA) (ES)**
- **MECERREYES, David**
  **48940 LEIOA (VIZCAYA) (ES)**
- **VAUTHIER, Soline**
  **48940 LEIOA (VIZCAYA) (ES)**
- **CASADO, Nerea**
  **48940 LEIOA (VIZCAYA) (ES)**
- **GUZMAN, Gregorio**
  **48940 LEIOA (VIZCAYA) (ES)**

(74) Representative: **Cabinet Beau de Loménie**
**158, rue de l'Université**
**75340 Paris Cedex 07 (FR)**

Remarks:
Amended claims in accordance with Rule 137(2) EPC.

(54) **SELF-STANDING SOLID ELECTROLYTE FOR SOLID LITHIUM-AIR BATTERY CELLS AND METHOD OF PREPARATION THEREOF**

(57) The present invention relates to a UV or thermally-curable electrolyte composition comprising a crosslinker monomer and a liquid electrolyte based on diethylmethyl(2-methoxyethyl)ammonium bis(fluorosulfonyl)imide (DEME-FSI) and a lithium salt. This curable electrolyte composition is suitable for preparing a self-standing solid electrolyte, in which the liquid electrolyte is entrapped in the polymer network formed when curing the composition to ultraviolet light (UV) or high temperature. The self-standing solid electrolyte of the invention can be used in solid lithium-air battery cells and battery packs for electric vehicles and hybrid vehicles, electronic devices, and stationary power generating devices.

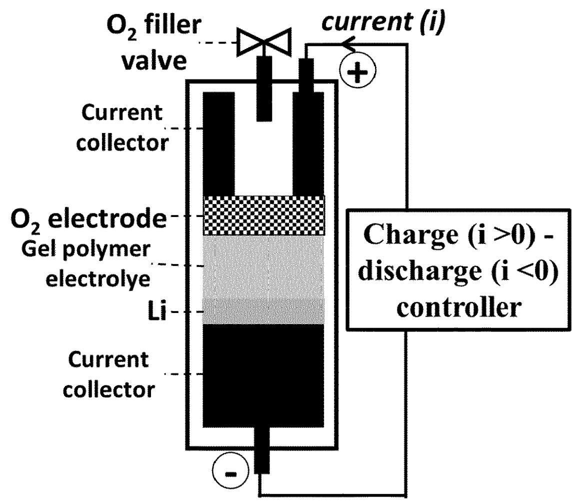


Figure 1

EP 4 261 973 A1

## Description

### Field of the invention

The present invention relates to a UV or thermally-curable electrolyte composition comprising a crosslinker monomer and a liquid electrolyte based on diethylmethyl(2-methoxyethyl)ammonium bis(fluorosulfonyl)imide (DEME-FSI) and a lithium salt. This curable electrolyte composition is suitable for preparing a self-standing solid electrolyte in which the liquid electrolyte is entrapped in the polymer network formed when curing the composition to ultraviolet light (UV) or high temperature. This self-standing solid electrolyte can be used in solid lithium-air battery cells and battery packs for electric vehicles and hybrid vehicles, electronic devices, and stationary power generating devices.

### Information acknowledging support for research

The project leading to the present patent application has received funding from the European Union's Horizon 2020 research and innovation programme under the Marie Sklodowska-Curie grant agreement No. 765828.

### Background to the invention

In recent years, with the rapid spread of information-related devices and communication devices such as personal computers, camcorders and cellular phones, it has become important to develop a battery for use as a power source for such devices. In the automobile industry, the development of high-power and high-capacity batteries for electric vehicles and hybrid vehicles has been promoted. Among various kinds of batteries, rechargeable lithium batteries have attracted attention due to their high energy density and high power. Especially, rechargeable lithium-air batteries have attracted attention as a rechargeable lithium battery for electric vehicles and hybrid vehicles, and especially for devices related to mobility, which is required to have high energy density.

Rechargeable lithium-air batteries use oxygen in the air as a cathode active material. Therefore, compared to conventional lithium rechargeable batteries containing a transition metal oxide (e.g. lithium cobaltate), as a cathode active material, rechargeable lithium-air batteries are able to have larger capacity as much as the specific surface of carbon used as catalyst support allowed.

In metal-air batteries, the cathode active material, oxygen, is not contained within the battery. Instead, this material is provided by the surrounding atmosphere. Naturally, such a system allows in principle a very high specific energy (energy provided by the battery per unit weight, typically given in Wh/kg in this technical field). In such batteries, oxygen may be partially reduced to peroxide, or fully reduced to hydroxide or oxide depending on the catalyst, electrolyte, availability of oxygen, etc. Especially, in lithium-air batteries, when the negative electrode (anode) is lithium (Li) metal or any lithium alloys, lithium peroxide ($Li_2O_2$) or lithium oxide ($Li_2O$) may be formed at the positive electrode side.

A lithium-air battery contains in general the following parts:

- a metal anode containing lithium,
- a non-aqueous electrolyte (e.g. containing a lithium salt), and
- an air cathode.

Other parts of the battery device may be present such as: current collectors on the anode and/or cathode side; a separator between the cathode-side electrolyte (catholyte) and anode-side electrolyte (anolyte); a barrier layer between a positive electrode (cathode) and electrolyte, or between a negative electrode (anode) and electrolyte.

For example, US 10,505,219 B2 describes an anode for a lithium-ion cell, protected with a pre-formed solid electrolyte interphase (SEI), which is stable for cell cycling even in the presence of substantial water in the cell electrolyte. The SEI protective electrolyte may comprise LiFSI with DEME-FSI, but for lithium-ion cells (not lithium metal). The theoretical energy densities and cycling current densities of this kind of cells are still limited.

US 2021/0175565 A1 discloses a folding type lithium air battery comprising a positive electrode composite, a negative electrode composite, and a separator comprising three membranes: a first electrolyte membrane that is in contact with the positive electrode composite, a second electrolyte membrane that is in contact with the negative electrode composite, and a diffusion prevention membrane positioned between the first electrolyte membrane and the second electrolyte membrane. The membranes have two components: a reinforcing layer and an electrolyte solution impregnated in the reinforcing layer. In addition, the liquid content in the electrolyte is limited leading to lower ionic conductivities.

Among known solid electrolytes for lithium-air batteries, the following problems need to be addressed:

- improving the ionic conductivity and cycling stability of the lithium-air battery;
- lowering hysteresis by decreasing charging voltage and/or increasing discharge voltage of the lithium-air battery by

improving the reaction rate during charge and discharge;
- improving the lithium plating stripping in a Li//Li cell.

Reasons for these poor performances in current solid state lithium metal cells may be: the low ionic conductivity of the solid electrolyte, difficulty of lithium cations to diffuse inside the solid electrolyte, and high interfacial resistance between electrode and solid electrolyte.

The present invention seeks to provide a self-standing solid electrolyte for solid lithium-air battery cells with higher ionic conductivity, current rate and capacity retention, long-term cycling (more than 100 at limited capacity of 2 mah.$cm^{-2}$) and cycling stability, than existing solid electrolytes, the solid electrolyte of the invention being able to protect lithium metal even at very high current densities.

The present invention also seeks to provide a dry process for preparing a self-standing solid electrolyte according to the invention that may help to avoid toxic vapours to treat and surface contamination of the solid state electrolyte, and thus help to keep good interfacial properties (no modification of lithium foil surface conductivity).

## Summary of the invention

With a view notably to addressing one or more of the problems/issues in the art discussed above, the present invention relates, in one aspect thereof, to a curable electrolyte composition comprising:

(A) a liquid electrolyte comprising diethylmethyl(2-methoxyethyl)ammonium bis(fluorosulfonyl)imide (DEME-FSI) and at least one lithium salt,
(B) at least one crosslinker monomer, and
(C) an initiator.

The present invention further relates, in a different aspect thereof, to a self-standing solid electrolyte obtained by exposing a curable electrolyte composition according to the invention to UV light or high temperature.

The present invention further relates, in a different aspect thereof, to a method for preparing a self-standing solid electrolyte according to the invention comprising the steps of:

(i) forming a liquid electrolyte (A) by mixing DEME-FSI with at least one lithium salt,
(ii) mixing the liquid electrolyte (A) obtained in step (i) with at least one crosslinker monomer (B), in presence of an initiator (C), and
(iii) polymerizing the mixture of step (ii) by exposure to UV light or high temperature.

The invention also concerns, in a different aspect thereof, a solid lithium-air battery cell comprising:

- a positive electrode using oxygen as a positive-electrode active material,
- a negative electrode containing a negative-electrode active material,
- a solid electrolyte layer positioned between the positive electrode active material layer and the negative electrode active material layer,
  wherein the solid electrolyte layer contains a self-standing solid electrolyte according to the invention or prepared according to the method of the invention.

A battery pack comprising at least two assembled solid lithium-air battery cells as defined above is also part of the invention.

The present invention further relates to the use of a battery pack according to the invention as a rechargeable battery for electric vehicles and hybrid vehicles, electronic devices, and stationary power generating devices.

Finally, the invention relates to a vehicle, an electronic device, and a stationary power generating device, and more particularly a car, bike, scooter and drone, comprising a battery pack according to the invention.

## Brief description of the Figures

**Figure 1** shows a scheme of lithium-air cells used for rate test performances and galvanostatic discharge/charge cycling performed at 0,05 mA/$cm^2$ using the solid electrolytes of the example E1 and comparative examples CE1, CE2 and CE3.

**Figure 2** shows a scheme of lithium-air cells used for rate test performances and galvanostatic discharge/charge

cycling performed at 0,05 mA/cm$^2$ using the liquid electrolyte of comparative example CE4.

**Figure 3** shows a scheme of Li-Li cells used for galvanostatic discharge/charge cycling performed at current rate from 0,01 to 2 mA.cm$^{-2}$ using the solid electrolytes of example E1 and comparative examples CE1, CE2 and CE3.

**Figure 4** shows a scheme of Li-Li cells galvanostatic discharge/charge cycling performed at current rate from 0,01 to 2 mA.cm$^{-2}$ using the liquid electrolyte of comparative example CE4.

**Figure 5** shows ionic conductivities for electrolytes according to the invention and comparative ones, obtained by Electrochemical Impedance Spectroscopy (EIS).

**Figure 6** shows the polarization potentials of Li-Li cells during galvanostatic discharge/charge cycling, having electrolytes according to the invention and comparative ones.

**Figure 7** shows the potential during galvanostatic discharge-charge test at 0,05 mA.cm$^{-2}$ of lithium-air cells, having electrolytes according to the invention and comparative ones.

**Figure 8** shows the rate test performances of lithium-air with the electrolytes according to the invention and comparative ones.

**Figure 9** shows the effect on the ionic conductivity of the amount of liquid electrolyte (A) within the solid electrolyte of example E1.

Detailed description of the invention

The curable electrolyte composition of the invention for preparing a self-standing solid electrolyte comprises:

(A) a liquid electrolyte comprising diethylmethyl(2-methoxyethyl)ammonium bis(fluorosulfonyl)imide (DEME-FSI) (also referred as plasticizer) and at least one lithium salt,
(B) at least one crosslinker monomer, and
(C) an initiator, and preferably a photoinitiator or a radical initiator.

In the curable composition of the present invention, the amount of liquid electrolyte (A) can range from 50 to 90% by weight, with respect to 100% by weight of the overall curable electrolyte composition. In a preferred embodiment, the amount of liquid electrolyte (A) is higher than 60% by weight, more preferably higher than 65% by weight, and even more preferably higher than 70% by weight, with respect to 100% by weight of the overall curable electrolyte composition. In a preferred embodiment, the amount of liquid electrolyte (A) does not exceed 90% by weight, with respect to 100% by weight of the overall curable electrolyte composition.

The lithium salt of the liquid electrolyte (A) may be selected from the group consisting of $LiPF_6$, $LiBF_4$, $LiClO_4$, LiFSI, LiTFSI, LiBOB $LiAsF_6$, LiFAP, LiTriflate, LiDMSI, LiHPSI, LiBETI, LiDFOB, LiBFMB, LiBison, LiDCTA, LiTDI, LiPDI, and mixtures thereof, advantageously from the group consisting of LiFSI, LiTFSI, LiTriflate, and mixtures thereof, and more advantageously the lithium salt of the liquid electrolyte (A) is LiFSI.

The amount of lithium salt preferably ranges from 5 to 55 mol%, and more preferably 10 to 35 mol%, within the liquid electrolyte (A).

The liquid electrolyte (A) may also comprise one or more optional additives such as inorganic particles, redox mediators, or additives well-known for improving the formation of an effective SEI such as vinylene carbonate (VC) and fluoroethylene carbonate (FEC).

The curable electrolyte composition of the invention also comprises at least one crosslinker monomer (B), which is advantageously present in an amount ranging from 8 to 50% by weight, preferably 8 to 30% by weight, and more preferably 8 to 20% by weight, with respect to 100% by weight of the overall curable electrolyte composition.

Preferably, the crosslinker monomer (B) shows functional groups available for UV/thermally initiated radical polymerisation/cross-linking (e.g. double bonds, acidic protons).

Thus, the crosslinker monomer (B) of the invention may be an $\alpha,\beta$-unsaturated carbonyl monomer, advantageously a (meth)acrylate monomer, an anhydride or a (meth)acrylamide monomer, and more advantageously a (meth)acrylate monomer.

The crosslinker monomer (B) is preferably a mono- or multifunctional (meth)acrylate monomer, more preferably a mono-, di-, tri-, penta- or hexa-(meth)acrylate monomer, and even more preferably an ester of mono-, di-, tri-, penta- or hexa-(meth)acrylic acid with a linear or branched, alicyclic, aromatic or heterocyclic ($C_2$-$C_{24}$)alcohol, or an ester of mono-, di-, tri-, penta- or hexa-(meth)acrylic acid with a ($C_2$-$C_{24}$)polyethylene glycol.

The mono- or multifunctional (meth)acrylate monomer may be selected from the group consisting of:

- an ester of mono-, di-, tri-, penta- or hexa-(meth)acrylic acid with a ($C_2$-$C_{24}$)polyethylene glycol preferably selected from the group consisting of diethylene glycol di(meth)acrylate, poly(ethylene glycol) methyl ether acrylate, poly(ethylene glycol) di(meth)acrylate, tetra(ethylene glycol) di(meth)acrylate, tri(ethylene glycol) di(meth)acrylate, ethylene glycol di(meth)acrylate, and mixtures thereof,

- an ester of mono-, di-, tri-, penta- or hexa-(meth)acrylic acid with a ($C_2$-$C_{24}$) alcohol preferably selected from 1,3-butanediol di(meth)acrylate, 1,4-butanediol di(meth)acrylate, 1,5-pentanediol di(meth)acrylate, 1,6-hexanediol di(meth)acrylate, glycerol di(meth)acrylate, pentaerythritol tri(meth)acrylate, glycerol tri(meth)acrylate, trimethylolpropane tri(meth)acrylate, trimethylolpropane tri(meth)acrylate, trimethylolpropane ethoxylate tri(meth)acrylate, trimethylolpropane propoxylate tri(meth)acrylate, pentaerythritol tri(meth)acrylate, glycerol tri(meth)acrylate, pentaerythritol tetra(meth)acrylate, di-trimethylolpropane tetra(meth)acrylate, dipentaerythritol penta(meth)acrylate, dipentaerythritol hexa(meth)acrylate, and mixture thereof,
- an ester of mono-, di-, tri-, penta- or hexa-(meth)acrylic acid with a ($C_2$-$C_{24}$)perfluorinated compound, preferably selected from 2,2,3,3,4,4,5,5,6,6,7,7-dodecafluoroheptyl (meth)acrylate, 2,2,3,3-tetrafluoropropyl (meth)acrylate 2,2,3,4,4,4-hexafluorobutyl (meth)acrylate, 1,1,1,3,3,3-hexafluoroisopropyl (meth)acrylate, octafluoropentyl(meth)acrylate, pentafluorobenzyl (meth)acrylate, 1H,1H-pentadecafluoro-n-octyl (meth)acrylate, pentafluorophenyl (meth)acrylate, 1H,1H,2H,2H-nonafluorohexyl (meth)acrylate, 2,2,3,3,4,4,4-heptafluorobutyl (meth)acrylate, 1H,1H,2H,2H-heptadecafluorodecyl (meth)acrylate, 1H,1H,2H,2H-tridecafluoro-n-octyl (meth)acrylate, 1,6-bis(acryloyloxy)-2,2,3,3,4,4,5,5-octafluorohexane, 2,2,2-trifluoroethyl (meth)acrylate, methyl 2-fluoro(meth)acrylate, and mixtures thereof.

In this embodiment, the most preferred crosslinker monomer (B) is an ester of mono-, di-, tri-, penta- or hexa-(meth)acrylic acid with a ($C_2$-$C_{24}$)polyethylene glycol, and more preferably selected from the group consisting of diethylene glycol di(meth)acrylate, poly(ethylene glycol) methyl ether (meth)acrylate, poly(ethylene glycol) di(meth)acrylate, tetra(ethylene glycol) di(meth)acrylate, tri(ethylene glycol) di(meth)acrylate, ethylene glycol di(meth)acrylate, methoxy poly(ethylene glycol) monomethacrylate, and mixtures thereof. Poly(ethylene glycol) dimethacrylate (PEGDM) is particularly preferred.

In the present invention, the expression "(meth)acrylate monomer" includes all monomers with an acrylate and/or a methacrylate unit.

The curable electrolyte composition also comprises at least one initiator (C), preferably at least one photoinitiator or radical initiator, and more preferably at least one photoinitiator.

The radical initiator may be an azo compound such as azobisisobutyronitrile (AIBN) or dimethyl azobisisobutyrate (AIBME), or an organic peroxide such as benzoyl peroxide (BPO), di-tert-butyl peroxide, or methyl ethyl ketone peroxide.

The photoinitiator may be a photoinitiator which has an aryl-CO- group, such as those having a benzophenone structure, the aryl system being not necessarily an unsubstituted aryl (phenyl) ring, but potentially having substitution. Generally useful photoinitiators are able to abstract hydrogen atoms (H). Preferred photoinitiators in the present invention are notably able to absorb light in the range 200-400 nm and belong to the class of free-radical photoinitiators, notably Type II photoinitiators.

In a preferred embodiment, the initiator (C) is a photoinitiator, more preferably selected from the group consisting of 2-hydroxy-2-methylpropiophenone (for example sold under the name DAROCUR® 1173 by BASF), 2,2-dimethoxy-1,2-diphenylethan-1-one, 1-hydroxy-cyclohexyl-phenyl-ketone (for example sold under the name IRGACURE® 184 by Ciba Specialty Chemicals), benzophenone, 2-ethylhexyl-(4-N,N-dimethylamino)benzoate, ethyl-4-(dimethylamino)benzoate, phenylbis(2,4,6-trimethylbenzoyl)phosphine oxide (BAPO), and mixtures thereof.

In the curable electrolyte composition of the invention, the amount of initiator (C) may range from 0,3 to 1,5% by weight, and preferably from 0,3 to 0,9% by weight, with respect to 100% by weight of the overall curable electrolyte composition.

In the curable electrolyte composition of the invention, the components (A), (B) and (C) have preferably a water content below 10 ppm, and more preferably below 5 ppm, and/or are obtained via a distillation process and/or via a drying step on molecular sieves and/or via a combination of both a distillation process and a drying step on molecular sieves. When there is still some water in the curable electrolyte composition, the ionic conductivity may be higher. However, in order to avoid the formation of an interface layer on the surface of the Li-ion conducting solid electrolyte, it is preferable to have as much as possible dried materials.

In the present invention, it is possible to add further additives to the curable electrolyte composition, even if they are not essential components for the present invention. Such optional further additives may for example include one or more of:

- lithium ion conductors such as LISICON-based (e.g. $Li_{14}ZnGe_4O_{16}$), Garnet-based (e.g. $Li_7La_3Zr_2O_{12}$ (LLZO)), Perovskite-based (e.g. lithium-lanthanum-titanate (LLTO)), NASICON-based (e.g. lithium-aluminum-titanium-phosphate (LATP));
- cellulose filler, rice grains, soy fibers, coconut fibers, starch grains, oyster shell, mussel shell, crustacean shell with a particle size from 10 nm to 100 $\mu$m;
- ceramic filler ($SiO_2$, $Al_2O_3$, MgO, $ZrO_2$, CaO, BaO, $La_2O_3$, $Bi_2O_3$, $Ga_2O_3$, $Cr_2O_3$, $Ta_2O_3$, $V_2O_3$, $P_2O_5$, $Mg_3Al_2Si_3O_{12}$,

$Fe_3Al_2Si_3O_{12}$, $Ca_3Fe_2Si_3O_{12}$, $Ca_3Al_2Si_3O_{12}$, $Ca_3Cr_2Si_3O_{12}$), or sand grain, with a particle size from 10 nm to 100 μm;
- binding agents such as: polyvinylidene fluoride (PVdF), styrene-butadiene rubber (SBR), carboxymethyl cellulose (CMC), polytetrafluoroethylene (PTFE);
- optionally, some surfactants can be added along with some processing aids. Possible examples of classes of appropriate surfactant include non-ionic surfactants such as alkyl polyglycosides or poloxamers.

In a further aspect, the present disclosure relates to a self-standing solid electrolyte obtained by exposing a curable electrolyte composition according to the invention to UV light or high temperature.
When the self-standing solid electrolyte is obtained by exposing a curable electrolyte composition according to the invention to UV light, for example to a LED-UV light source LightningCure® V3 (Hamamatsu), it is preferably exposed to a wavelength ranging from 200 to 600 nm, and more preferably from 300 to 450 nm, advantageously during 1 to 15 minutes, and more advantageously during 1 to 5 minutes.
When the self-standing solid electrolyte is obtained by exposing a curable electrolyte composition according to the invention to high temperature, it is preferably exposed to a temperature ranging from 60 to 120°C, and more preferably 70 to 90°C.
Yet, in another aspect, the present invention relates to a method for preparing a self-standing solid electrolyte as defined in the invention, said method comprising the steps of:

(i) forming a liquid electrolyte (A) by mixing the plasticizer DEME-FSI with at least one lithium salt,
(ii) mixing the liquid electrolyte (A) obtained in step (i) with at least one crosslinker monomer (B), in presence of an initiator (C), and
(iii) polymerizing the mixture of step (ii) by exposure to UV light or high temperature.

In the method of the invention, the components of the curable electrolyte composition are preferably previously distilled and/or dried on molecular sieves and/or both distilled and dried on molecular sieves before being used. Thus, the components of the curable electrolyte composition may advantageously be mixed in a non-obvious dried way in order to:

- avoid the surface contamination of the Li-ion conducting solid electrolyte which may have a bad impact on Li-ionic conductivity;
- obtain good mechanical properties for the self-standing solid electrolyte.

In the method of the invention, the polymerizing step (iii) may be carried out by UV-curing under UV light, for example under a LED-UV light source LightningCure® V3 (Hamamatsu), preferably at a wavelength ranging from 200 to 600 nm, and more preferably from 300 to 450 nm, advantageously during 1 to 15 minutes, and more advantageously during 1 to 5 minutes.
In the method of the invention, the polymerizing step (iii) may be carried out by thermal-curing, preferably at a temperature ranging from 60 to 120°C, and more preferably 70 to 90°C.
In a preferred embodiment, the polymerizing step (iii) is carried out by UV-curing.
In a further aspect, the present disclosure relates to a solid lithium-air battery cell comprising the following elements:

- a positive electrode using oxygen as a positive-electrode active material,
- a negative electrode containing a negative-electrode active material,
- a solid electrolyte layer positioned between the positive electrode active material layer and the negative electrode active material layer,

wherein the solid electrolyte layer contains a (cured) self-standing solid electrolyte according to the invention or produced according to the method of the invention.
In such an all-solid-state lithium battery, using as solid electrolyte the (cured) self-standing solid electrolyte material according to the present invention, as regards the thickness of a solid electrolyte layer, although this may change with the kind of solid electrolyte materials, and the overall composition of an all-solid battery, generally it is preferable that this thickness is within the range of 0,5 to 1000 μm, more preferably within the range of 30 to 200 μm, and still more preferably 50 to 200 μm. The solid electrolyte layer will appropriately be thicker than the maximum particle size in the self-standing solid electrolyte of the invention.

<Cathode>

In the solid lithium-air battery cell of the invention, the positive electrode (which may also be referred to as "cathode" hereinafter) comprises at least a cathode active material (which may also be referred to as "positive electrode active material" hereinafter). As the cathode active material, general cathode active materials for lithium batteries can be used and the cathode active material is not particularly limited.

In the solid lithium-air battery cell of the invention, the positive electrode uses oxygen as a positive-electrode active material. Oxygen serving as the positive-electrode active material may be contained in air or oxygen gas.

In the solid lithium-air battery cell of the invention, the positive electrode may be a component in which the redox catalyst is supported on a carrier. An example of the carrier is carbon. Examples of carbon include carbon blacks, such as Ketjen Black, acetylene black, channel black, furnace black, lamp black, and thermal black; graphite, such as natural graphite, e.g., scaly graphite, artificial graphite, and expanded graphite; activated carbon from charcoal and coal; carbon foam; carbon fibers obtained by carbonizing synthetic fibers and petroleum pitch-based materials; carbon nanofibers; molecular carbon such as fullerenes; and tubular carbon, such as carbon nanotubes. Modified carbons such as N-doped carbon may also be used.

Positive electrode materials can also be used in a solid lithium-air battery cell of the invention based on materials other than carbon. For example, positive electrode materials based on metal foam, stable and conductive metal oxides, or steel, can be used.

In the present invention, where carbon is used, it is preferably a porous material in the form of a powder and preferably has a high specific surface area of 20 to 2000 $m^2/g$, preferably 60 to 2000 $m^2/g$, and most preferably 60 to 1500 $m^2/g$. For example, carbon may be used upon which a treatment is performed by a general method to increase porosity or surface area, followed by another treatment to increase the wettability. Examples of the commercial carbon products which can be used in the present invention include the KS series, SFG series, Super P series and Super S series available from TIMCAL Ltd., activated carbon products available from Norit, Black Pearl and AB-Vulcan 72 available from Cabot, and KB-ECP and KB-ECP600JD available from Nouryon. Other examples of commercially available carbon include the WAC powder series available from Xiamen All Carbon Corporation, PW15-type, J-type and S-type Activated Carbons available from Kureha, and Maxsorb MSP-15 available from Kansai Netsu Kagaku.

Examples of the method for increasing the porosity, surface area and wettability of the carbon include physical activation or chemical activation. The chemical activation method includes, for example, immersing the carbon material in a strong alkaline aqueous solution (potassium hydroxide solution for example), in an acid solution (nitric acid or phosphoric acid for example) or in a salt (zinc chloride for example). This treatment can be followed (but not necessarily) by a calcination step at relatively low temperature (450°C to 900°C for example).

In addition, the carbon preferably has pores having a pore diameter of 5 nm or more, preferably 20 nm or more. The specific surface area of the carbon and the pores size can be measured by the BET method or the BJH method, for example. Furthermore, in general, the carbon preferably has an average particle diameter (primary particle diameter) of 8 to 350 nm, more preferably 30 to 50 nm. The average primary particle diameter of the carbon can be measured by TEM.

The carbon used in the present invention may show any one of the above-mentioned preferred ranges for specific surface area, pore diameter or particle diameter. Preferred carbon in the framework of the invention includes carbon showing a preferred range for just one of these types of physical feature, or carbon showing preferred ranges for two of the features, or carbon showing preferred ranges for each of the three features of specific surface area, pore diameter or particle diameter.

Among forms of carbon that can be used in the present invention are: Super P® Li (Timcal) showing a particle size of 40 nm and a specific surface area (determined by the Brunauer Emmet & Teller method) of 62 $m^2/g$; Black Pearl® 2000 (from Cabot Corporation) showing a particle size of 12 nm and a Specific Surface Area (determined by the Brunauer Emmet & Teller method) of 1487 $m^2/g$; Ketjen Black® EC-600JD (from AzkoNobel) showing a specific surface area (determined by the Brunauer Emmet & Teller method) of 1400 $m^2/g$.

In the lithium-air battery cell of the invention, the positive electrode may contain a binder. The binder is not particularly limited. The binder may be composed of a thermoplastic resin or a thermosetting resin. Examples thereof include polyethylene, polypropylene, polytetrafluoroethylene (PTFE), polyvinylidene fluoride (PVDF), styrene-butadiene rubber (SBR), tetrafluoroethylene-hexafluoropropylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, and ethylene-acrylic acid copolymers. Copolymers having sulfonate group-terminated perfluorovinyl ether groups attached to a poly(tetrafluoroethylene) backbone, such as those commonly referred to as Nafion®, may also be envisaged as polymer binder materials in the present invention. These materials may be used separately or in combination as a mixture.

Although the thickness of a positive active material layer may change according to the kind of all-solid-state battery made, it is generally preferable that it is within the range of 0,1 to 500 $\mu$m.
In preferred embodiments for manufacturing solid lithium-air batteries according to the invention, the positive electrode is preferably dried before assembly. This drying process may also appropriately be applied for negative electrode too.

<Anode>

In the solid lithium-air battery cell of the invention, the negative electrode (which may also be referred to as "anode" hereinafter) comprises at least an anode active material (which may also be referred to as "negative electrode active material" hereinafter). As the anode active material, general anode active materials for lithium batteries can be used and the anode active material is not particularly limited. In general, the anode active material is able to store/release $Li^+$ ions present in Li-air batteries.
Specific anode active materials for rechargeable lithium-air batteries are, for example, a lithium metal, lithium protected anodes, lithium alloys such as a lithium-aluminum alloy, a lithium-tin alloy, a lithium-lead alloy and a lithium-silicon alloy, metal oxides such as a tin oxide, a silicon oxide, a lithium-titanium oxide, a niobium oxide and a tungsten oxide, metal sulfides such as a tin sulfide and titanium sulfide, metal nitrides such as a lithium-cobalt nitride, a lithium-iron nitride and a lithium manganese nitride, and carbonaceous materials such as graphite. Of these, lithium metal is preferred.
By "lithium-protected anode", reference is made here for example (but is not limited to) to a "Lithium Protected Electrode" (LPE). Usually the Li is covered by a solid electrolyte (for example NASICON with formulae $LiM_2(PO_4)_3$ or LiSiCON related to the $\gamma$-$Li_3PO_4$ crystal structure). Between the solid electrolyte and the Li metal, there is usually an interlayer (for example consisting of $Cu_3N/Li_3N$). In LPE systems, Li metal can be attached directly to one side of solid electrolyte material, or alternatively a small amount of solvent containing a Li salt electrolyte may be added between the solid electrolyte material and the Li metal to ensure Li ionic conductivity. Such materials have been described in, for example, US 7 282 295 and US 7 491 458.
When a metal, alloy or the like in the form of foil or metal is used as the anode active material, it can be used as the anode itself.
The anode is required to contain at least an anode active material; however, as needed, it can contain a binder for fixing the anode active material. The type and usage of the binder are the same as those of the air cathode described hereinafter, so that they will not be described here.
An anode collector may be connected to the anode, which collects current from the anode. The material for the anode collector and the shape of the same are not particularly limited. Examples of the material for the anode collector include stainless steel, copper and nickel. Examples of the form of the anode collector include a foil form, a plate form and a mesh (grid) form.
In the lithium-air, particularly preferred anode materials are one or more of the following: Li metal, Li alloy such as $Si_xLi_y$, $Sn_xLi_y$, $Sb_xLi_y$, $Sn_xSb_yLi_z$, $C_xLi_y$, $In_xLi_y$, $Al_xLi_y$, or lithiated oxide such as $Li_4Ti_5O_{12}$, $TiNb_2O_7$, $Nb_{16}W_5O_{55}$ or $Nb_{18}W_{16}O_{93}$. Combinations of these materials can be used. In the present invention, the most preferred negative electrode active material is lithium metal (Li metal). The Li metal may be in the form of Li foil or Li particles.
The thickness of the negative electrode active material layer will generally be appropriately within the range of 0,1 to 500 $\mu$m.
A solid lithium-air battery cell according to the present disclosure has at least the positive active material layer, solid electrolyte layer, and negative electrode active material layer which were mentioned above. It further usually has a positive current collector which collects a positive active material layer, and a negative pole collector which performs current collection of a negative electrode active material layer. As a material of a positive current collector, for example, SUS (stainless steel), aluminum, nickel, iron, titanium, carbon, etc. can be mentioned, and SUS is especially preferable. On the other hand as a material of a negative pole collector, SUS, copper, nickel, carbon, etc. can be mentioned, for example, and SUS is especially preferable. Concerning the thickness, form, etc. of a positive pole collector and a negative pole collector, the person skilled in the art may choose suitably according to the use of the all-solid-state battery, etc. The cell case used for a common all-solid-state battery can be used, for example, the cell case made from SUS, etc. can be mentioned.
The solid lithium-air battery cell of the present disclosure can be considered as a chargeable and dischargeable solid battery in a room temperature environment. Although it may be a primary battery and may be a rechargeable battery, it is especially preferable that it is a rechargeable battery.
As regards the manufacturing method of the solid lithium-air battery cell of the invention, this is not particularly limited, and common manufacturing methods of all-solid-state batteries can be used. For example, when an all-solid-state battery is in the thin film form, a positive active material layer can be formed on a substrate, and a method of forming a solid electrolyte layer and a negative electrode active material layer in order, and laminating them thereafter

etc., may be used, but other process variants can be envisaged. For example, in the present invention, the curable electrolyte composition for preparing a self-standing solid electrolyte according to the invention, can be directly polymerized (thermally or UV cured) in-situ on top of an electrode material film.

In another aspect, the invention also aims at a battery pack comprising at least two assembled lithium-air battery cells as defined above.

The lithium-air battery of the present invention can be used as a rechargeable battery for electric vehicles and hybrid vehicles, especially devices related to mobility, or in various electronic devices (such as computers and telephones), and stationary power generating devices, and more particularly for cars, bikes, scooters and drones.

Finally, in a further aspect, the invention aims at a vehicle, an electronic device, and a stationary power generating device, comprising a battery pack according to the invention, and more particularly the invention aims at a car, bike, scooter and drone, comprising a battery pack according to the invention.

Any combination of the above described elements in all possible variations thereof is encompassed by the invention unless otherwise indicated herein or otherwise clearly contradicted by context. Thus, all features and embodiments described herein in particular as applicable, advantageous or preferred in the context of the invention are to be construed as being applicable in combination with one another, in preferred embodiments of the invention.

Examples:

Preparation of a self-standing solid electrolyte according to the invention and comparative ones:

All the raw materials were first dried by adding activated 4Å molecular sieves (Aldrich, 4-8 mesh), and allowed 5 days for drying effect. The lithium salts were additionally vacuum-dried at 100°C for 24 hours, and the crosslinker monomer dried under vacuum for 24 hours, before use.

All material preparation and cells assemblies were carried out inside an argon filled glovebox with levels of $H_2O$ < 0,01 ppm and $O_2$ < 0,01 ppm.

Preparation of ionic liquids:

Four ionic liquids, named as DEME-FSI, DEME-TFSI, DEME-BETI and DEME-$C_4F_9SO_3$, were synthesized by a salt metathesis reaction, as previously reported in literature (Vanhoutte et al., RSC Adv., 2018, 8, 4525-4530; Gouveia et al., Phys. Chem. Chem. Phys., 2017, 19, 28876-28884; Costa et al., ChemPhysChem, 2012, 13, 1902-1909), according to the following Scheme 1:

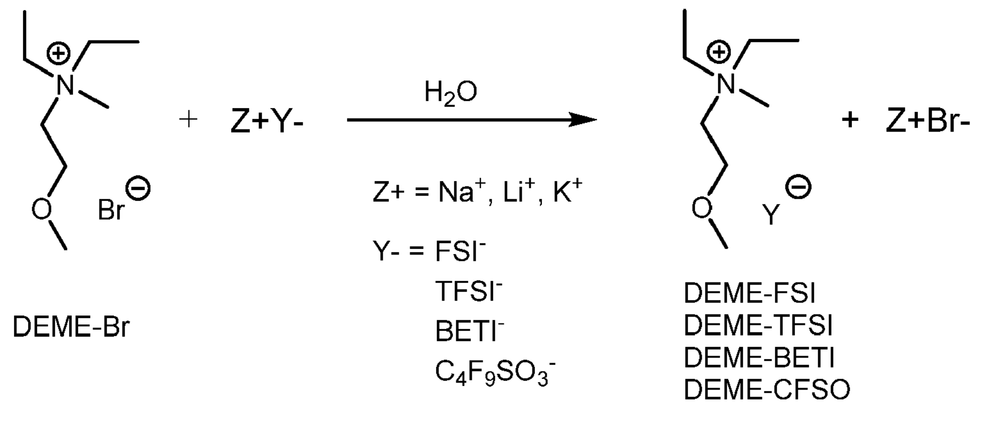


Scheme 1

As shown in Scheme 1, an anion exchange reaction occurs between the $Br^-$ anion, coming from N,N-diethyl-N-methyl-N-(2-methoxyethyl)ammonium bromide (DEME-Br), and the negative ion of the monovalent salt ($X^+$ = $Na^+$, $Li^+$, $K^+$) containing the counter-ion of interest $Y^-$ ($Y^-$ = $FSI^-$, $TFSI^-$, $BETI^-$, $C_4F_9SO_3^-$). The salts used for the anion exchange reaction were as follows:

- sodium bis(fluorosulfonyl)imide (NaFSI, 99,7%, Solvionic),
- lithium bis(trifluoro-methylsulfonyl)imide (LiTFSI, 99%, IoLiTec),
- lithium bis(perfluoroethylsulfonyl)imide (LiBETI, 99%, IoLiTec), and
- potassium nanofluoro-1-butanesulfonate ($KC_4F_9SO_3$, 95,0%, TCI).

Preparation of liquid electrolytes:

Liquid electrolytes E1, CE1, CE2, CE3 and CE4 were prepared by mixing the ionic liquids previously prepared with the corresponding salts as follows:

- in example 1 (E1) and comparative example 4 (CE4): LiFSI was mixed with DEME-FSI at 20 mol% concentration and stirred for 2 hours at room temperature (20°C);
- in comparative example 1 (CE1): LiTFSI was mixed with DEME-TFSI at 20 mol% concentration and stirred for 2 hours at room temperature (20°C);
- in comparative example 2 (CE2): LiBETI was mixed with DEME-BETI at 20 mol% concentration and stirred for 8 hours at 50°C;
- in comparative example 3 (CE3): $LiC_4F_9SO_3$ was mixed with DEME-$C_4F_9SO_3$ at 20 mol% concentration for 18 hours at 60°C.

Preparation of curable electrolyte compositions:

The liquid electrolytes E1, CE1, CE2 and CE3 prepared above were mixed with the crosslinker monomer poly(ethylene glycol) dimethacrylate (PEGDM, Sigma-Aldrich, Mn 550). The mixtures were stirred for 1 hour before adding the photoinitiator 2-hydroxy-2-methylpropiophene (DAROCUR® 1173, Sigma-Aldrich, 97%) at 3% w/w of monomers. Proportions of each constituent in the different liquid electrolytes are indicated in Table 1 below.

An additional liquid electrolyte E1* according to the invention was prepared in the same way as E1, but with only approximately 50% by weight of liquid electrolyte E1.

An additional liquid electrolyte E2 according to the invention was prepared in the same way as E1, but with the addition of the radical initiator azobisisobutyronitrile (AIBN, Sigma-Aldrich, 97%) at 3% w/w of monomers (instead of the photoinitiator 2-hydroxy-2-methylpropiophenone DAROCUR® 1173).

**Table 1**

| | Liquid electrolyte | | Composition of the electrolyte (%wt) | | | |
|---|---|---|---|---|---|---|
| | **Ionic liquid** | **Lithium salt** | **Ionic liquid** | **Lithium salt** | **Monomer** | **Initiator** |
| **E1** | DEME-FSI | Li-FSI | 78,5 | 11,2 | 10,0 | 0,3 |
| **E1*** | DEME-FSI | Li-FSI | 43,1 | 6,2 | 49,3 | 1,4 |
| **E2** | DEME-FSI | Li-FSI | 78,5 | 11,2 | 10,0 | 0,3 |
| **CE1** | DEME-TFSI | Li-TFSI | 76,8 | 12,9 | 10,0 | 0,3 |
| **CE2** | DEME-BETI | Li-BETI | 75,8 | 13,9 | 10,0 | 0,3 |
| **CE3** | DEME-$C_4F_9SO_3$ | Li-$C_4F_9SO_3$ | 76,5 | 13,2 | 10,0 | 0,3 |
| **CE4** | DEME-FSI | Li-FSI | 87,0 | 13,0 | - | - |

Preparation of self-standing solid electrolytes:

UV-cured electrolytes E1, CE1, CE2 and CE3 were obtained by drop-casting the curable electrolyte compositions prepared above on a silicon mould (Φ 11,28 mm circular voids) and irradiating with a LED-UV light source for less than 2 minutes (300 - 400 nm, with peak at 385 nm, LightningCure® V3, Hamamatsu).

A thermally-cured electrolyte E2 was obtained by drop-casting the curable electrolyte composition prepared above on a silicon mould (Φ 11,28 mm circular voids) and heating at 70°C during 4 hours under argon atmosphere using Büchi® Glass Oven B-585 (Sigma-Aldrich).

In sum, the following cured electrolytes were prepared and tested:

- E1: UV-cured electrolyte prepared with liquid electrolyte based on DEME-FSI ionic liquid and LiFSI salt, with 90% by weight of liquid electrolyte E1;
- E1*: UV-cured electrolyte prepared with liquid electrolyte based on DEME-FSI ionic liquid and LiFSI salt, with 50% by weight of liquid electrolyte E1;
- E2: thermally-cured electrolyte prepared with liquid electrolyte based on DEME-FSI ionic liquid and LiFSI salt, with 90% by weight of liquid electrolyte E1;

- CE1: UV-cured electrolyte prepared with liquid electrolyte based on DEME-TFSI ionic liquid and LiTFSI salt, with 90% by weight of liquid electrolyte CE1;
- CE2: UV-cured electrolyte prepared with liquid electrolyte based on DEME-BETI ionic liquid and LiBETI salt, with 90% by weight of liquid electrolyte CE2;
- CE3: UV-cured electrolyte prepared with liquid electrolyte based on DEME-$C_4F_9SO_3$ ionic liquid and $LiC_4F_9SO_3$ salt, with 90% by weight of liquid electrolyte CE3.

The liquid electrolyte DEME-FSI and LiFSI salt was also tested as such, without crosslinker monomer, in a comparative example 4 (CE4).

Fabrication of air electrodes:

Gas diffusion layer sheets (GDL, Quintech, GER) were dried under vacuum at 120°C for 24 hours. Ketjenblack® 600 carbon (AkzoNobel) was dried at 100°C under vacuum for 24 hours. Reference binder LITHion™ dispersion (Ion Power Inc) was used from after adding activated 4Å molecular sieves and allowed 5 days for drying effect. The water content, measured by Coulumetric Karl Fischer, decreased from 252,05 ppm to 218 ppm for the binder. Anhydrous 2-propanol (anhydrous IPA, MilliPore Sigma, < 0,005% $H_2O$, ≥ 99,9%) was used as received.

Positive air electrodes were formed by a gas diffusion layer (GDL) coated with a slurry containing 80% by weight of carbon and 20% by weight of LITHion™ binder. The GDL sheets were punched into circular samples (Φ 11,28 mm) and dried.

To make the slurry, 0,6% by weight of carbon, 1,6% by weight of LITHion™ binder, and 97,8% by weight of anhydrous IsoPropyl Alcohol (IPA) solvent were mixed together. The slurry components were placed in a glass vial and mixed homogeneously using an IKA T18 ULTRA-TURRAX®, at speed 2 for at least 1 hour. The slurry was immediately used and 70 μL of the ink was deposited on each circular GDL. These were covered and allowed to dry at room temperature (20°C) for 24 hours. The coated GDLs had an average carbon loading of 0,72 $mg \cdot cm^{-2}$.

Assembly of lithium-air cells:

Lithium-air Swagelok cells were used and placed in specifically designed PEEK containers. The cured electrolytes (E1, E2, CE1, CE2 and CE3) were sandwiched between the negative and positive electrodes. The positive electrode was placed with the coated side facing the electrolyte surface and an aluminum mesh was used as current collector **(Figure 1).** For CE4 liquid electrolyte, two glass fiber sheets, previously dried at 150°C under vacuum for 24 hours (Φ 11,28 mm, Whatman®, GF/A grade) and soaked with the liquid electrolyte mixture (200 μL), were used **(Figure 2).**

Lithium metal (Φ 8 mm, 120 μm thick from Rockwood Lithium (US)) was used as received. This stack was then tightened in a PEEK Swagelok cell and transferred inside a sealed PEEK container. The argon gas inside the container was then purged and replaced by oxygen gas.

Assembly of the Li-Li cells:

For E1, CE1, CE2 and CE3, the self-standing solid electrolytes were directly sandwiched between to two lithium foils. For CE4 liquid electrolyte, a glass fiber sheet, previously dried at 150°C under vacuum for 24 hours (Φ 11,28 mm, Whatman®, GF/A grade) and soaked with the liquid electrolyte mixture (200 μL), was sandwiched between to two lithium foils **(Figure 4).** This sandwich was then placed between two stainless steel spacers in the middle of stainless steel caps electronically isolated by a PEEK cylinder and tightened by 3 nut-bolt-insulator screws. A similar tightened of 2,2 $N.m^{-1}$ was applied on all samples thanks to a torque wrench. Thickness was controlled by a Thickness Gauge TECLOCK Model PG-20J in order to insure the flatness of each sample. This stack was then placed in an insulated glass container to ensure inert atmosphere during testing.

Electrochemical characterization:

<u>Ionic conductivity measurements by Electrochemical Impedance Spectroscopy (EIS):</u>

The ionic conductivity was determined at different temperatures by EIS. The measurement was carried out with an Autolab 302N potentiostat galvanostat (Metrohm AG) with a temperature controller (Microcell HC station). The temperatures were set between 25 and 85°C. Electrolytes were sandwiched between two stainless steels electrodes. EIS was monitored using a frequency range of 0,1 Hz to 100 kHz with an amplitude of 10 mV.

Ionic conductivity measurements were done at least two times for each composition to assess the reproducibility of the obtained values. The ohmic resistance R, determined by fitting the impedance spectrum by an equivalent circuit, was used to calculate the ionic conductivity thanks to the following equation:

$$\sigma = L/(A * R),$$

where L is the thickness of the electrolyte and A the area of the stainless electrode respectively.

**Figure 5** shows the ionic conductivities obtained by EIS for electrolytes E1, E2, CE1, CE2, CE3 and CE4. The results shown on **Figure 5** demonstrate that the self-standing electrolytes E1 and E2, which are solid electrolytes, have similar ionic conductivities than liquid electrolyte CE4. It also shows that self-standing electrolytes of the invention can be prepared equally by UV-curing or thermal-curing, as demonstrated by the similar ionic conductivities results obtained for E1 and E2 (self-standing electrolytes with the same composition but prepared by UV-curing and thermal-curing, respectively).

The effect on the ionic conductivity of the amount of liquid electrolyte within the curable electrolyte composition was also studied. For this purpose, the self-standing solid electrolytes E1 and E1* were compared on **Figure 9.** The results obtained demonstrate that a higher level of liquid electrolyte (90% by weight vs 50% by weight of the overall curable electrolyte composition) improves the ionic conductivity obtained by EIS.

Galvanostatic discharge-charge on lithium-air cells:

As shown in **Figure 3,** lithium-air cells were cycled with cut-off potentials of 2 V (discharge) and 4,6 V (charge) to determine their absolute discharge/charge capacities at ± 0,05 mA.cm$^{-2}$ and 60°C. Tests were started after 3 hours conditioning at Open Circuit Voltage (OCV).

**Figure 6** shows the polarization potentials of Li-Li cells galvanostatic during discharge/charge cycling for electrolytes E1, CE1, CE2, CE3 and CE4. **Figure 6** shows that Li-Li cell containing the self-standing solid electrolyte E1 keeps low polarisation < 1,0 V with a current of 2 mA.cm$^{-2}$ when cells with self-standing solid electrolytes CE1, CE2 and CE3 achieve polarisation > 2V with a current of 0,5 mA.cm$^{-2}$. CE4 had similar polarisation potentials than E1 until 1 mA.cm$^{-2}$, and then suffered from soft-short circuits at higher currents. Cells with self-standing electrolyte E1 are able to withstand higher current densities than cells with the liquid electrolyte CE4.

**Figure 7** shows the first cycle of a galvanostatic discharge-charge test at 0,05 mA.cm$^{-2}$ on lithium-air cells for electrolytes E1, CE1, CE2, CE3 and CE4. **Figure 7** shows that Li-$O_2$ cell containing the self-standing solid electrolyte E1 present a superior absolute capacity compared to Li-$O_2$ cells containing self-standing solid electrolytes CE1, CE2 and CE3, and work in a similar manner than cells using a liquid electrolyte.

Rate test performances:

The cells filled with $O_2$ were kept at the operating temperature (25 °C) in the temperature chamber for 3 h prior to the electrochemical tests. VMP multichannel potentiostats/galvanostats (Biologic, France) controlled with EC lab software was used to apply different current rate from 0,5.10$^{-3}$ mA.cm$^{-2}$ to 0,35 mA.cm$^{-2}$ for 15 min following the potential until potential reached the value of 2V.

**Figure 8** shows the rate test performances of lithium-air cells with the electrolytes E1, CE1, CE2, CE3 and CE4. These results show that Li-$O_2$ cell with the self-standing solid electrolyte E1 is able to work with higher current density compared to Li-$O_2$ cells with other electrolytes, and even with CE4 liquid electrolyte.

## Claims

1. A curable electrolyte composition comprising:

   (A) a liquid electrolyte comprising diethylmethyl(2-methoxyethyl)ammonium bis(fluorosulfonyl)imide (DEME-FSI) and at least one lithium salt,
   (B) at least one crosslinker monomer, and
   (C) an initiator.

2. A curable electrolyte composition according to claim 1, wherein the amount of liquid electrolyte (A) is higher than 60% by weight and does not exceed 90% by weight, with respect to 100% by weight of the overall curable electrolyte composition.

**3.** A curable electrolyte composition according to claim 1 or claim 2, wherein the lithium salt is selected from the group consisting of $LiPF_6$, $LiBF_4$, $LiClO_4$, LiFSI, LiTFSI, LiBOB $LiAsF_6$, LiFAP, LiTriflate, LiDMSI, LiHPSI, LiBETI, LiDFOB, LiBFMB, LiBison, LiDCTA, LiTDI, LiPDI, and mixtures thereof, preferably LiFSI, LiTFSI, LiTriflate, and mixtures thereof, and more preferably LiFSI.

**4.** A curable electrolyte composition according to any of claims 1 to 3, wherein the amount of lithium salt ranges from 5 to 55 mol%, and preferably 10 to 35 mol%, within the liquid electrolyte (A).

**5.** A curable electrolyte composition according to any of claims 1 to 4, wherein the crosslinker monomer (B) is an $\alpha,\beta$-unsaturated carbonyl monomer, preferably a (meth)acrylate monomer, an anhydride or a (meth)acrylamide monomer, and more preferably a (meth)acrylate monomer.

**6.** A curable electrolyte composition according to claim 5, wherein the crosslinker monomer (B) is a mono- or multifunctional (meth)acrylate monomer, preferably an ester of mono-, di-, tri-, penta- or hexa-(meth)acrylate monomer, more preferably an ester of mono-, di-, tri-, penta- or hexa-(meth)acrylic acid with a linear or branched, alicyclic, aromatic or heterocyclic ($C_2$-$C_{24}$)alcohol, or an ester of mono-, di-, tri-, penta- or hexa-(meth)acrylic acid with a ($C_2$-$C_{24}$)polyethylene glycol, and more preferably an ester of mono-, di-, tri-, penta- or hexa-(meth)acrylic acid with a ($C_2$-$C_{24}$)polyethylene glycol.

**7.** A curable electrolyte composition according to claim 6, wherein the crosslinker monomer (B) is selected from the group consisting of diethylene glycol di(meth)acrylate, poly(ethylene glycol) methyl ether (meth)acrylate, poly(ethylene glycol) di(meth)acrylate, tetra(ethylene glycol) di(meth)acrylate, tri(ethylene glycol) di(meth)acrylate, ethylene glycol di(meth)acrylate, methoxy poly(ethylene glycol) monomethacrylate, and mixtures thereof, and preferably poly(ethylene glycol) dimethacrylate (PEGDM).

**8.** A curable electrolyte composition according to any of claims 1 to 7, wherein the amount of crosslinker monomer (B) ranges from 8 to 50% by weight, preferably 8 to 30% by weight, and more preferably 8 to 20% by weight, with respect to 100% by weight of the overall curable electrolyte composition.

**9.** A curable electrolyte composition according to any of claims 1 to 8, wherein the components (A), (B) and (C) have a water content below 10 ppm, preferably below 5 ppm, and/or are obtained via a distillation process and/or via a drying step on molecular sieves and/or via a combination of both a distillation process and a drying step on molecular sieves.

**10.** A self-standing solid electrolyte obtained by exposing a curable electrolyte composition according to any of claims 1 to 9 to UV light or high temperature.

**11.** A method for preparing a self-standing solid electrolyte according to claim 10 comprising the steps of:

(i) forming a liquid electrolyte (A) by mixing DEME-FSI with at least one lithium salt,
(ii) mixing the liquid electrolyte (A) obtained in step (i) with at least one crosslinker monomer (B), in presence of an initiator (C), and
(iii) polymerizing the mixture of step (ii) by exposure to UV light or high temperature.

**12.** A method according to claim 11, wherein the polymerizing step (iii) under UV light is carried out at a wavelength ranging from 200 to 600 nm, and preferably from 300 to 450 nm, advantageously during 1 to 15 minutes, and more advantageously during 1 to 5 minutes.

**13.** A method according to claim 11 or claim 12, wherein the components (A), (B) and (C) are previously distilled and/or dried on molecular sieves and/or both distilled and dried on molecular sieves before being used.

**14.** A solid lithium-air battery cell comprising:

- a positive electrode using oxygen as a positive-electrode active material,
- a negative electrode containing a negative-electrode active material,
- a solid electrolyte layer positioned between the positive electrode active material layer and the negative electrode active material layer,

wherein the solid electrolyte layer contains a self-standing solid electrolyte according to claim 10 or prepared according to the method of any of claims 11 to 13.

**15.** A battery pack comprising at least two assembled solid lithium-air battery cells according to claim 14.

**16.** Use of a battery pack according to claim 15 as a rechargeable battery for electric vehicles and hybrid vehicles, electronic devices, and stationary power generating devices, and preferably for cars, bikes, scooters and drones.

**17.** A vehicle, an electronic device, and a stationary power generating device, and more particularly a car, bike, scooter and drone, comprising a battery pack according to claim 15.

**Amended claims in accordance with Rule 137(2) EPC.**

**1.** A curable electrolyte composition comprising:

(A) a liquid electrolyte comprising diethylmethyl(2-methoxyethyl)ammonium bis(fluorosulfonyl)imide (DEME-FSI) and at least one lithium salt,
(B) at least one crosslinker monomer, and
(C) an initiator,

wherein the amount of liquid electrolyte (A) is higher than 60% by weight and does not exceed 90% by weight, with respect to 100% by weight of the overall curable electrolyte composition.

**2.** A curable electrolyte composition according to claim 1, wherein the lithium salt is selected from the group consisting of $LiPF_6$, $LiBF_4$, $LiClO_4$, LiFSI, LiTFSI, LiBOB $LiAsF_6$, LiFAP, LiTriflate, LiDMSI, LiHPSI, LiBETI, LiDFOB, LiBFMB, LiBison, LiDCTA, LiTDI, LiPDI, and mixtures thereof, preferably LiFSI, LiTFSI, LiTriflate, and mixtures thereof, and more preferably LiFSI.

**3.** A curable electrolyte composition according to claim 1 or claim 2, wherein the amount of lithium salt ranges from 5 to 55 mol%, and preferably 10 to 35 mol%, within the liquid electrolyte (A).

**4.** A curable electrolyte composition according to any of claims 1 to 3, wherein the crosslinker monomer (B) is an $\alpha,\beta$-unsaturated carbonyl monomer, preferably a (meth)acrylate monomer, an anhydride or a (meth)acrylamide monomer, and more preferably a (meth)acrylate monomer.

**5.** A curable electrolyte composition according to claim 4, wherein the crosslinker monomer (B) is a mono- or multifunctional (meth)acrylate monomer, preferably an ester of mono-, di-, tri-, penta- or hexa-(meth)acrylate monomer, more preferably an ester of mono-, di-, tri-, penta- or hexa-(meth)acrylic acid with a linear or branched, alicyclic, aromatic or heterocyclic ($C_2$-$C_{24}$)alcohol, or an ester of mono-, di-, tri-, penta- or hexa-(meth)acrylic acid with a ($C_2$-$C_{24}$)polyethylene glycol, and more preferably an ester of mono-, di-, tri-, penta- or hexa-(meth)acrylic acid with a ($C_2$-$C_{24}$)polyethylene glycol.

**6.** A curable electrolyte composition according to claim 5, wherein the crosslinker monomer (B) is selected from the group consisting of diethylene glycol di(meth)acrylate, poly(ethylene glycol) methyl ether (meth)acrylate, poly(ethylene glycol) di(meth)acrylate, tetra(ethylene glycol) di(meth)acrylate, tri(ethylene glycol) di(meth)acrylate, ethylene glycol di(meth)acrylate, methoxy poly(ethylene glycol) monomethacrylate, and mixtures thereof, and preferably poly(ethylene glycol) dimethacrylate (PEGDM).

**7.** A curable electrolyte composition according to any of claims 1 to 6, wherein the amount of crosslinker monomer (B) ranges from 8 to 50% by weight, preferably 8 to 30% by weight, and more preferably 8 to 20% by weight, with respect to 100% by weight of the overall curable electrolyte composition.

**8.** A curable electrolyte composition according to any of claims 1 to 7, wherein the components (A), (B) and (C) have a water content below 10 ppm, preferably below 5 ppm, and/or are obtained via a distillation process and/or via a drying step on molecular sieves and/or via a combination of both a distillation process and a drying step on molecular sieves.

**9.** A self-standing solid electrolyte obtained by exposing a curable electrolyte composition according to any of claims 1 to 8 to UV light or high temperature.

**10.** A method for preparing a self-standing solid electrolyte according to claim 9 comprising the steps of:

(i) forming a liquid electrolyte (A) by mixing DEME-FSI with at least one lithium salt,
(ii) mixing the liquid electrolyte (A) obtained in step (i) with at least one crosslinker monomer (B), in presence of an initiator (C), and
(iii) polymerizing the mixture of step (ii) by exposure to UV light or high temperature.

**11.** A method according to claim 10, wherein the polymerizing step (iii) under UV light is carried out at a wavelength ranging from 200 to 600 nm, and preferably from 300 to 450 nm, advantageously during 1 to 15 minutes, and more advantageously during 1 to 5 minutes.

**12.** A method according to claim 10 or claim 11, wherein the components (A), (B) and (C) are previously distilled and/or dried on molecular sieves and/or both distilled and dried on molecular sieves before being used.

**13.** A solid lithium-air battery cell comprising:

- a positive electrode using oxygen as a positive-electrode active material,
- a negative electrode containing a negative-electrode active material,
- a solid electrolyte layer positioned between the positive electrode active material layer and the negative electrode active material layer,

wherein the solid electrolyte layer contains a self-standing solid electrolyte according to claim 10 or prepared according to the method of any of claims 10 to 12.

**14.** A battery pack comprising at least two assembled solid lithium-air battery cells according to claim 13.

**15.** Use of a battery pack according to claim 14 as a rechargeable battery for electric vehicles and hybrid vehicles, electronic devices, and stationary power generating devices, and preferably for cars, bikes, scooters and drones.

**16.** A vehicle, an electronic device, and a stationary power generating device, and more particularly a car, bike, scooter and drone, comprising a battery pack according to claim 14.

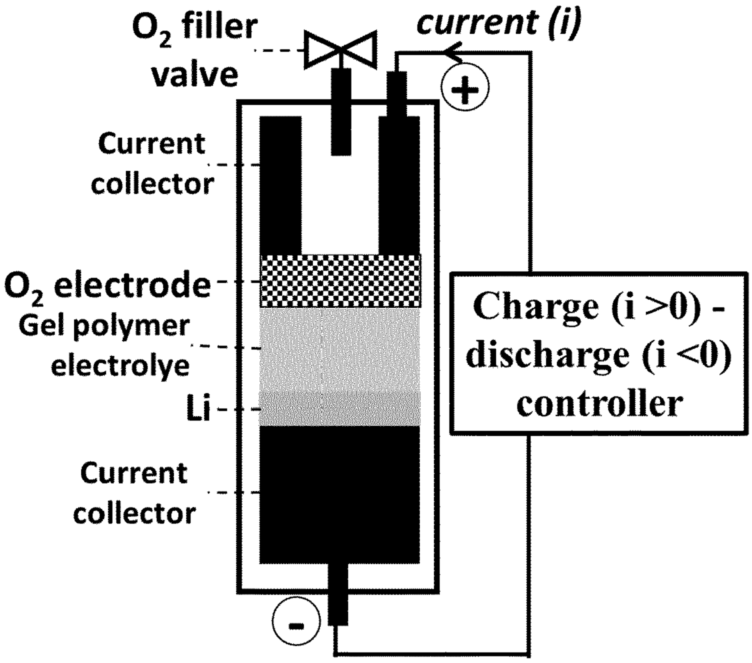
O2 filler valve
current (i)
+
Current collector
O2 electrode
Gel polymer electrolye
Li
Current collector
-
Charge (i >0) - discharge (i <0) controller

**Figure 1**

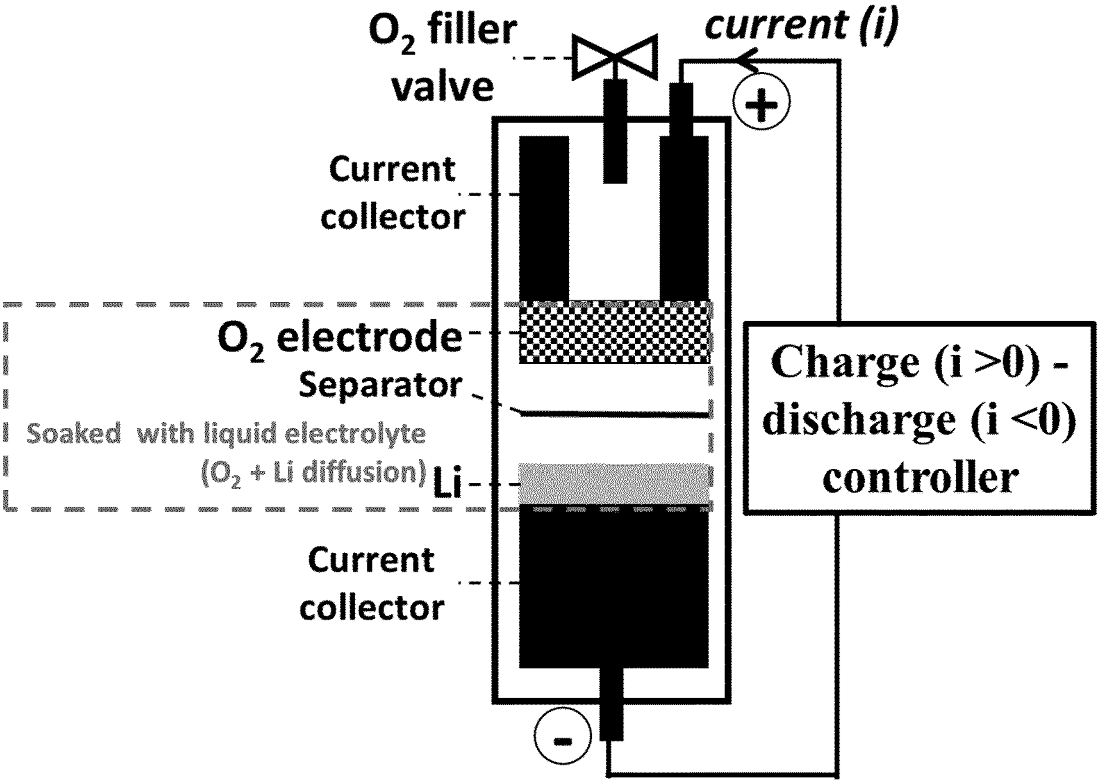
$O_2$ filler valve
current (i)
Current collector
$O_2$ electrode
Separator
Soaked with liquid electrolyte ($O_2$ + Li diffusion)
Li
Current collector
Charge (i >0) - discharge (i <0) controller

**Figure 2**

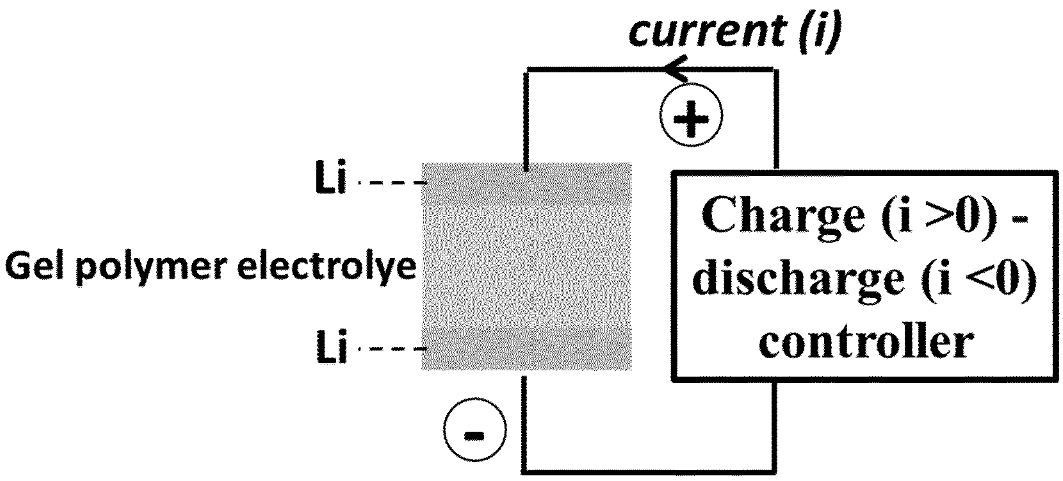
current (i)
Li
Gel polymer electrolye
Li
Charge (i >0) - discharge (i <0) controller

Figure 3

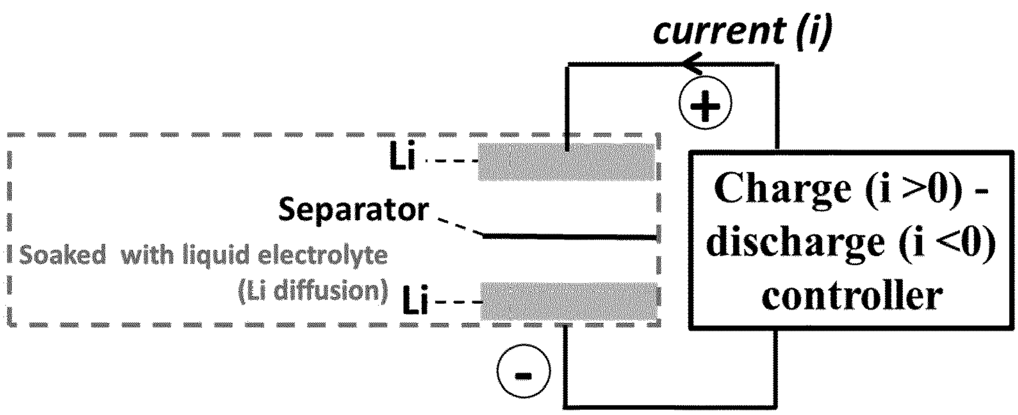
current (i)
+
Li
Separator
Soaked with liquid electrolyte
(Li diffusion)
Li
-
Charge (i >0) -
discharge (i <0)
controller

**Figure 4**

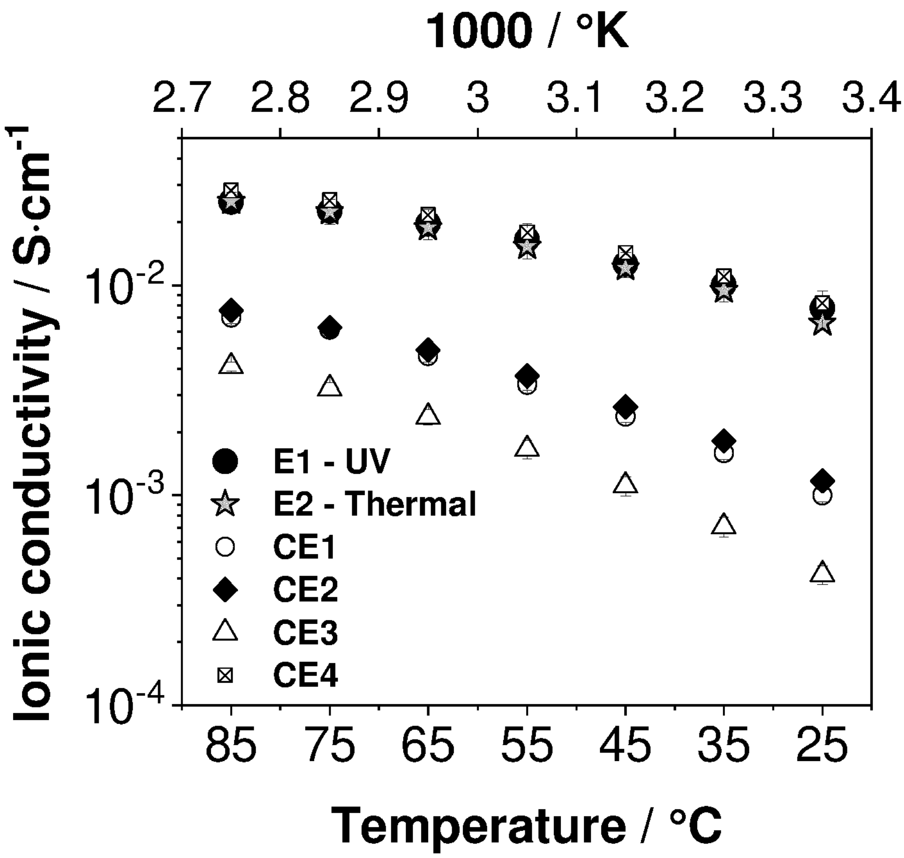
1000 / °K
2.7
2.8
2.9
3
3.1
3.2
3.3
3.4
Ionic conductivity / S·cm-1
10-2
10-3
10-4
E1 - UV
E2 - Thermal
CE1
CE2
CE3
CE4
85
75
65
55
45
35
25
Temperature / °C

Figure 5

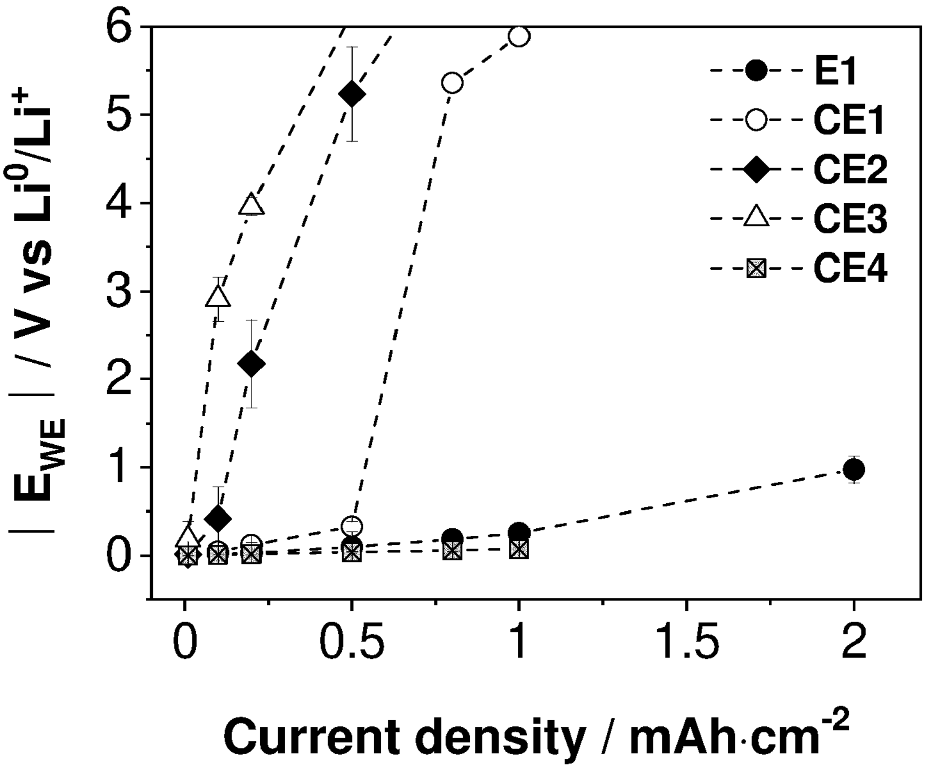
6
5
4
3
2
1
0
0
0.5
1
1.5
2
| E_WE | / V vs Li⁰/Li⁺
Current density / mAh·cm⁻²
E1
CE1
CE2
CE3
CE4

**Figure 6**

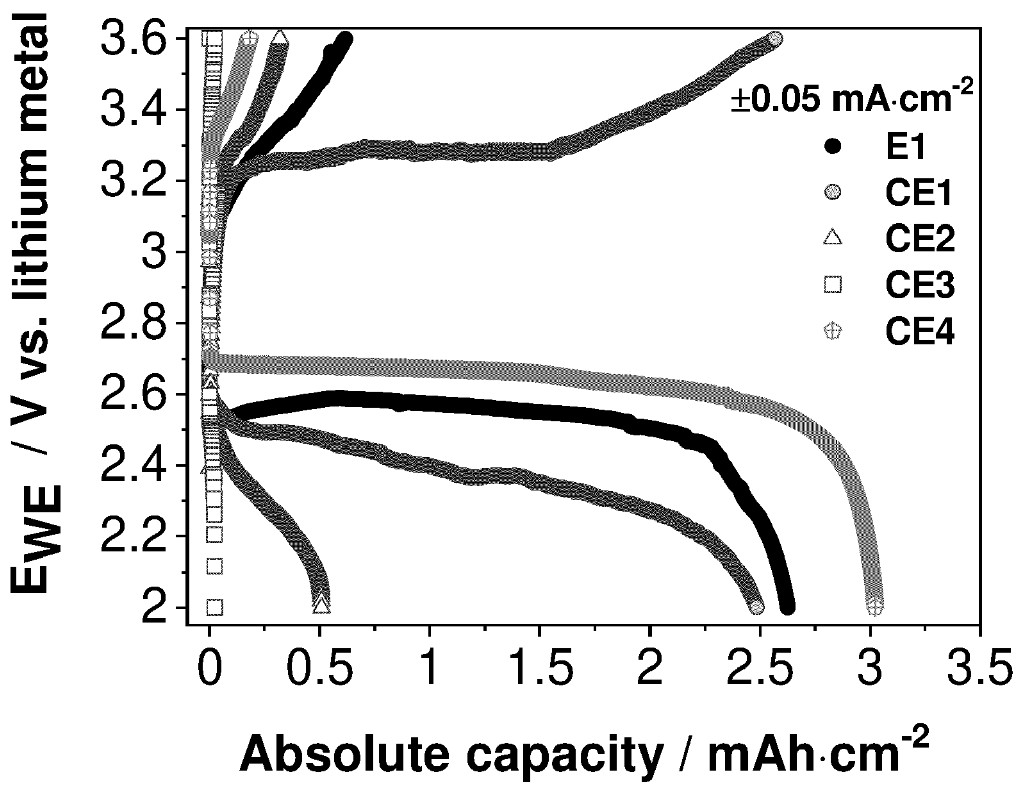

EWE / V vs. lithium metal
3.6
3.4
3.2
3
2.8
2.6
2.4
2.2
2
0
0.5
1
1.5
2
2.5
3
3.5
Absolute capacity / mAh·cm-2
±0.05 mA·cm-2
E1
CE1
CE2
CE3
CE4


Figure 7

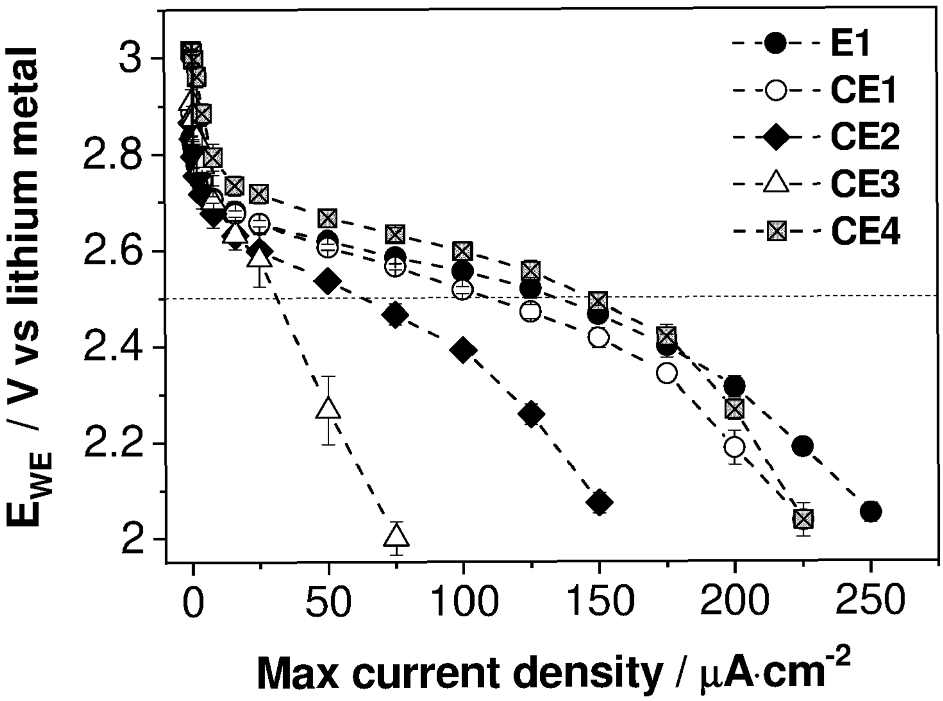
E1
CE1
CE2
CE3
CE4
3
2.8
2.6
2.4
2.2
2
0
50
100
150
200
250
$E_{WE}$ / V vs lithium metal
Max current density / μA·cm$^{-2}$

Figure 8

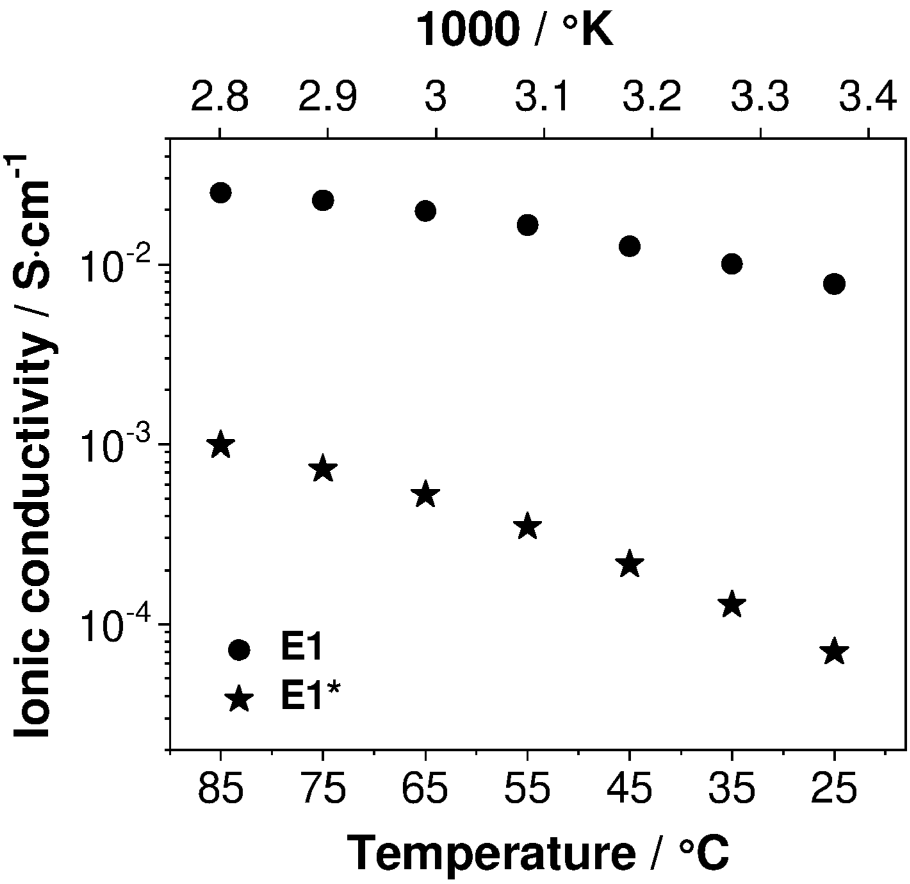
1000 / °K
2.8
2.9
3
3.1
3.2
3.3
3.4
Ionic conductivity / S·cm$^{-1}$
$10^{-2}$
$10^{-3}$
$10^{-4}$
E1
E1*
85
75
65
55
45
35
25
Temperature / °C

Figure 9

Europäisches Patentamt
European Patent Office
Office européen des brevets

# EUROPEAN SEARCH REPORT

Application Number
EP 22 30 5543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/287240 A1 (HUDAK NICHOLAS [US]) 10 September 2020 (2020-09-10) * paragraphs [0292] - [0294], [0299], [0300], [0303] - [0305]; claims 1,2,11,21; figure 5; examples * * paragraphs [0335] - [0343], [0363] - [0365], [0373] * ----- | 1-17 | INV. H01M10/0525 H01M10/0565 |
| Y | US 2021/175565 A1 (LEE JAE SEUNG [KR]) 10 June 2021 (2021-06-10) * paragraphs [0014], [0060]; claims 1,5 * ----- | 1-17 | |
| Y | US 2019/173131 A1 (TAKECHI KENSUKE [JP] ET AL) 6 June 2019 (2019-06-06) * claims 1-3,9,10; examples 1-3 * ----- | 1-17 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 10 October 2022 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 30 5543

This annex lists the patent family members relating to the patent documents cited in the above-mentioned European search report. The members are as contained in the European Patent Office EDP file on
The European Patent Office is in no way liable for these particulars which are merely given for the purpose of information.

10-10-2022

| Patent document cited in search report | Publication date | Patent family member(s) | Publication date |
|---|---|---|---|
| US 2020287240 A1 | 10-09-2020 | NONE | |
| US 2021175565 A1 | 10-06-2021 | CN 113036266 A | 25-06-2021 |
| | | KR 20210071240 A | 16-06-2021 |
| | | US 2021175565 A1 | 10-06-2021 |
| US 2019173131 A1 | 06-06-2019 | JP 2019133914 A | 08-08-2019 |
| | | US 2019173131 A1 | 06-06-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10505219 B2
- US 20210175565 A1
- US 7282295 B
- US 7491458 B


### Non-patent literature cited in the description


- **VANHOUTTE et al.** *RSC Adv.,* 2018, vol. 8, 4525-4530
- **GOUVEIA et al.** *Phys. Chem. Chem. Phys.,* 2017, vol. 19, 28876-28884
- **COSTA et al.** *ChemPhysChem,* 2012, vol. 13, 1902-1909